# FASCICULE DE BREVET EUROPEEN

(11) **EP 1 238 327 B1**
(45) Date de publication et mention de la délivrance du brevet: **22.08.2007**
(21) Numéro de dépôt: 00988945.2
(22) Date de dépôt: 15.12.2000
(51) Int. Cl.: G06F 1/16

(54) **DISPOSITIF D'AFFICHAGE D'IMAGE ET CADRE POUR UN TEL DISPOSITIF**
ANZEIGEVORRICHTUNG UND RAHMEN FÜR EINE SOLCHE
IMAGE DISPLAY DEVICE AND FRAME FOR SUCH A DEVICE

(30) Priorité: 17.12.1999 FR 9915956
(43) Date de publication de la demande: 11.09.2002
(73) Titulaire: Thomson Licensing, 92100 Boulogne-Billancourt (FR)
(72) Inventeur: BRESSAN, Claude, F-49100 Angers (FR); GUERIN, Bernard, F-95000 Cergy (FR); VERGNEAU, Gérard, F-95520 Osny (FR)
(74) Mandataire: Le Dantec, Claude
(86) Numéro de dépôt international: PCT/FR2000/003570
(87) Numéro de publication internationale: WO 2001/044909

(56) Documents cités:
- DE-U- 29 616 175
- DE-U- 29 715 913
- US-A- 5 768 370
- US-A- 5 806 940
- US-A- 5 823 641

## Description

La présente invention concerne les dispositifs d'affichage d'image, tels que les téléviseurs et les moniteurs ainsi qu'un cadre pour de tels dispositifs.

Un dispositif d'affichage d'image comprend essentiellement un écran d'affichage reçu dans un coffret. Le coffret contient généralement un chassis qui porte des éléments électriques pour l'alimentation électrique de l'écran et la transmission des signaux électriques représentant l'image à l'écran.

Selon une solution classique, décrite par exemple dans la demande de brevet WO 90/04902. le coffret se compose d'une partie avant, sur laquelle sont montés l'écran et le chassis, et d'une partie arrière qui ferme la partie avant. Cette solution est particulièrement avantageuse parce qu'elle permet un bon positionnement de l'écran relativement au coffret, comme décrit dans la demande de brevet susmentionnée.

Toutefois elle ne permet pas à l'utilisateur de changer facilement la partie du coffret qui entoure l'écran, par exemple afin de changer l'aspect esthétique du dispositif d'affichage.

Le document DE 29715913 décrit un filtre comportant des moyens de fixation à un écran.

L'invention propose un cadre selon la revendication 1.
Des modes de réalisation particuliers sont décrits dans les revendications dépendantes.

D'autres caractéristiques de l'invention apparaîtront dans la description qui suit. Le mode de réalisation décrit est pris à titre d'exemple non limitatif, en référence aux dessins annexés, dans lesquels :
- la figure 1 représente en vue de face un cadre pour dispositif d'affichage conforme à l'invention ;
- la figure 2 représente le cadre de la figure 1 en perspective ;
- la figure 3 représente le cadre de la figure 1 en vue de dos ;
- la figure 4 est la vue en coupe indiquée 4-4 sur la figure 1 ;
- la figure 5 est la vue en coupe indiquée 5-5 sur la figure 1 ;
- la figure 6 représente un coffret avant selon l'invention en vue de face :
- la figure 7 représente le coffret avant de la figure 6 en vue de côté ;
- la figure 8 représente le coffret avant de la figure 6 en vue de dessus ;
- la figure 9 représente en coupe l'assemblage du cadre de la figure 1 et du coffret avant de la figure 6, au niveau du plan de coupe indiqué 4-4 sur la figure 1.

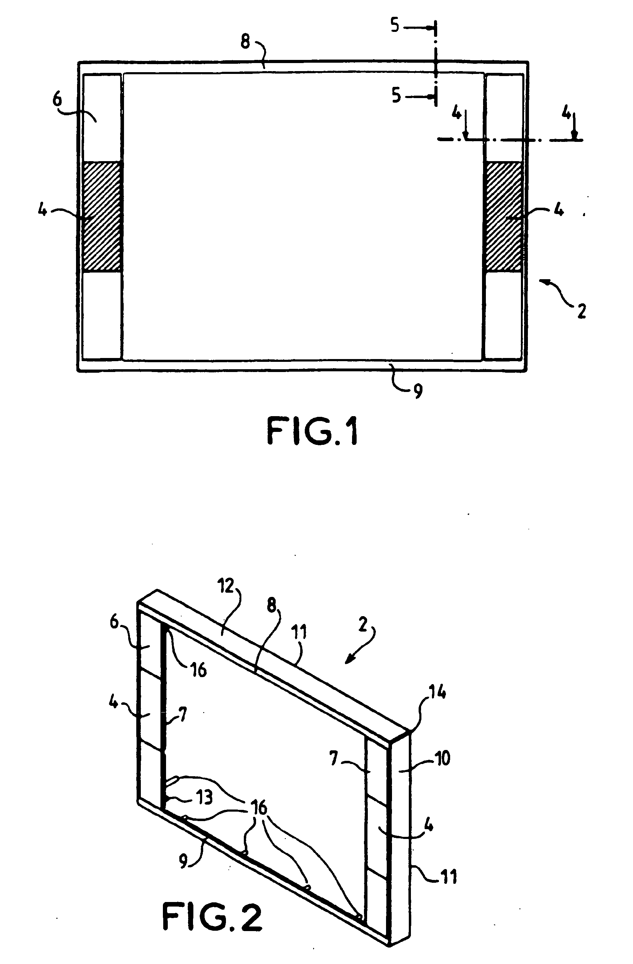

Un cadre 2 selon l'invention a une forme générale rectangulaire de manière à entourer la partie active d'un dispositif d'affichage, par exemple le tube cathodique d'un téléviseur. En vue de face (figure 1), le cadre 2 comporte essentiellement deux bords verticaux 6 parallèles ainsi que deux bras horizontaux parallèles respectivement supérieur et inférieur 8, 9.

Les bords 6 et les bras supérieur 8 et inférieur 9 s'étendent dans un même plan. Les bords 6 comportent chacun une zone grillagée 4 destinée à être placée au droit d'un haut-parleur que peut éventuellement comporter le dispositif d'affichage.

Le cadre 2 comporte deux parois verticales 10 parallèles entre elles et qui s'étendent à partir de la limite extérieure des bords 6, perpendiculairement aux bords 6. Le cadre 2 comporte une paroi horizontale supérieure 12 qui s'étend à partir de la limite extérieure du bras supérieur 8, perpendiculairement au bras supérieur 8 et deux parois horizontales inférieures 13 qui s'étendent à partir de la limite extérieure du bras inférieur 9, perpendiculairement au bras inférieur 9.

Les parois verticales 10 et les parois horizontales 12, 13 sont sécantes deux à deux au niveau de segments 14.

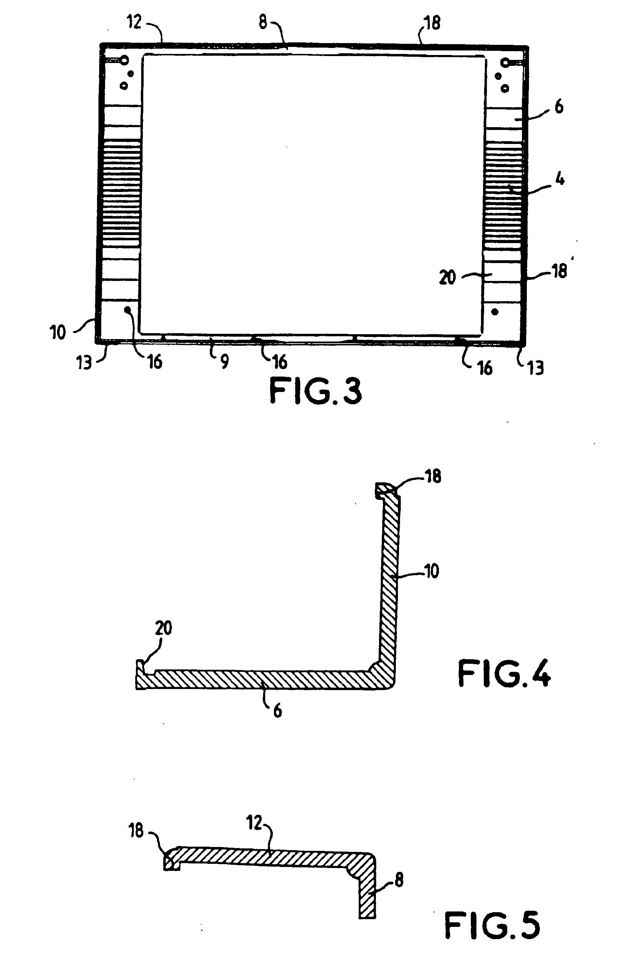

Comme bien visible sur les figures 2 et 3, le cadre 2 comporte des plots 16 qui permettent son positionnement par rapport au coffret avant du dispositif d'affichage.

Comme on peut le voir sur les figures 2, 3 et 4, le cadre 2 comporte des languettes 18 qui s'étendent à partir de l'extrémité libre 11 des parois verticales 10 et de la paroi horizontale supérieure 12, perpendiculairement à celles-ci et vers l'intérieur du cadre 2. Les languettes 18 sont donc situées dans un plan parallèle au plan des bords 6 et du bras 8.

Les languettes 18 sont peu étendues selon la direction perpendiculaire à la paroi 10,12 dont elles sont issues (par exemple les languettes 18 s'étendent sur 5 mm, dépassant ainsi de 2 mm pour une paroi 10,12 de 3 mm d'épaisseur). La dimension la plus importante des languettes 18 s'étend selon une direction parallèle à l'extrémité libre 11 de la paroi 10, 12 dont elles sont issues. De façon préférée, les languettes s'étendent dans leur plus grande dimension sur plus de 30 mm de façon à pouvoir être facilement manoeuvrées manuellement par un utilisateur comme décrit plus loin. Par exemple, les languettes 18 issues de la paroi verticale 10 s'étendent verticalement sur 45 mm.

Les bords 6 portent des nervures rentrantes 20 (voir figure 4) qui s'étendent à partir de l'extrémité intérieure 7 de chaque bord, perpendiculairement au bord 6 et vers l'arrière. Les nervures 20 sont donc parallèles aux parois latérales 10 qui s'étendent également vers l'arrière.

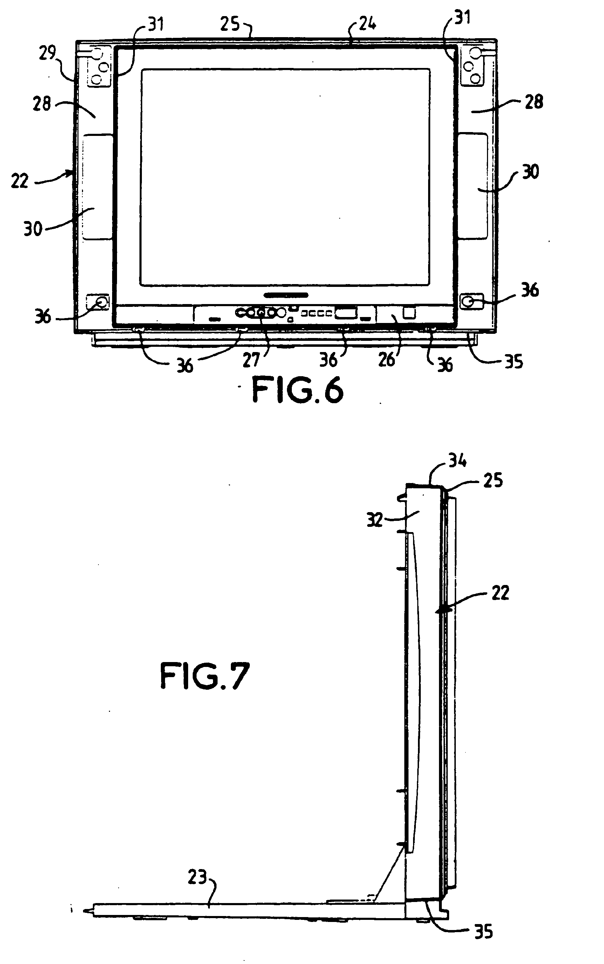

Le dispositif d'affichage comporte un coffret avant 22 représenté aux figures 6, 7 et 8 sur lequel sont montés un écran sensiblement plan et disposé sensiblement verticalement (non représenté) qui constitue la partie active du dispositif d'affichage, un chassis (non représenté) qui porte des éléments électriques pour l'alimentation électrique de l'écran et la transmission des signaux électriques représentant l'image à l'écran et un coffret arrière (non représenté) qui vient fermer par l'arrière le coffret avant 22. Le cadre 2 est également monté sur le coffret avant 22 comme décrit plus loin.

On définit comme étant l'axe de l'écran l'axe perpendiculaire à l'écran passant au centre de l'écran.

Comme bien visible sur la figure 6, le coffret avant comporte un bandeau supérieur 24, un bandeau inférieur 26 qui porte des évidements 27 pour le passage d'organes de commande liés électriquement au chassis, ainsi que deux bandeaux latéraux 28.

Le coffret avant 22 est muni de passages 36 destinés à recevoir les plots 16 du cadre 2.

Chaque bandeau latéral 28 porte un évidement 30 pour réception d'un haut-parleur. Chaque bandeau latéral 28 définit également une rainure 31 qui s'étend verticalement et est réalisée de manière à pouvoir recevoir la nervure 20 correspondante du cadre 2 comme décrit ci-dessous.

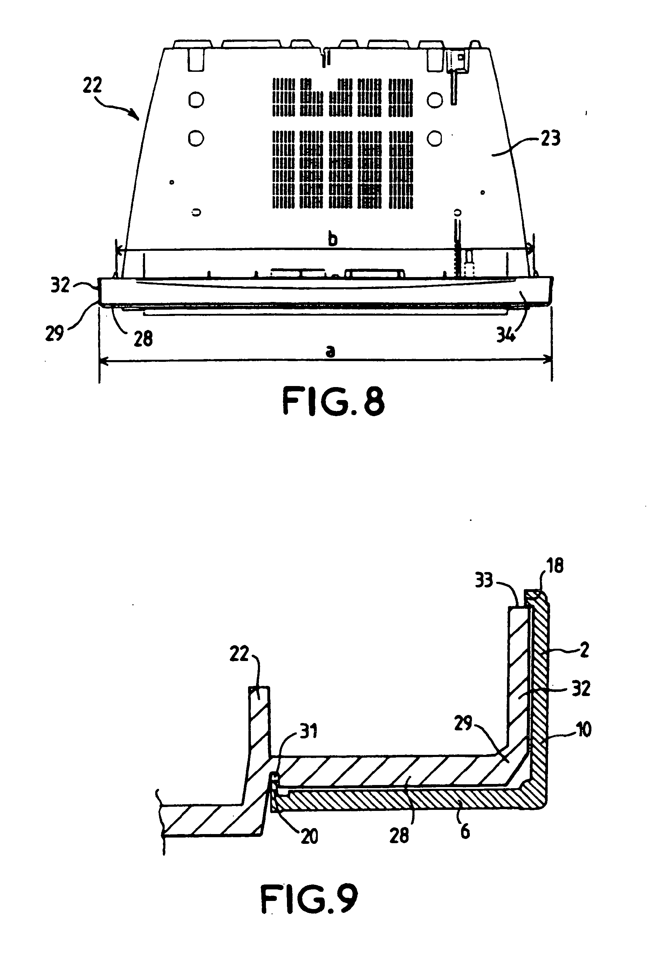

Des murets verticaux 32 s'étendent vers l'arrière à partir de chaque bandeau latéral 28, plus précisément à partir de l'extrémité extérieure 29 de chaque bandeau latéral 28. Un muret horizontal supérieur 34 s'étend vers l'arrière à partir de l'extrémité supérieure 25 du bandeau supérieur 24 et un muret horizontal inférieur 35 s'étend vers l'arrière à partir de l'extrémité inférieure du bandeau inférieur 26. Comme bien visible sur les figures 7 et 8, un plateau horizontal 23 s'étend à partir du bandeau inférieur 26, vers l'arrière. Le plateau 23 porte le chassis.

Les dimensions extérieures (par exemple horizontale a) du coffret avant 22 dans le plan des bandeaux 24, 26, 28 (c'est-à-dire dans un plan perpendiculaire à l'axe de l'écran) sont notablement supérieures à celles du coffret arrière (par exemple horizontale b) de manière à générer un espace (horizontalement a-b) pour les moyens de fixation du cadre 2 qui sont indépendants des moyens de fixation du coffret arrière au coffret avant 22.

Les moyens de fixation du cadre 2 sur le coffret avant 22 s'étendent donc à l'extérieur (c'est-à-dire sont plus éloignés de l'axe de l'écran) par rapport aux moyens de fixation du coffret arrière sur le coffret avant 22.

Le montage du cadre 2 sur le coffret avant 22 et le montage du coffret arrière sur le coffret avant 22 peuvent ainsi être réalisés de manière totalement indépendante, le premier sur l'avant, le second sur l'arrière.

Lorsque le cadre 2 est monté sur le coffret avant 22, des parties respectives de ces deux pièces s'engagent comme représenté en détail à la figure 9. Les parois horizontales 12, 13 s'étendent parallèles à et au contact respectivement des murets horizontaux 34, 35 ; les parois verticales 10 s'étendent respectivement parallèles et au contact de chaque muret vertical 32. Le cadre 2 entoure ainsi l'écran du dispositif d'affichage.

Chaque languette 18 est au contact de l'extrémité libre 33 du muret 32, 34 correspondant à la paroi 10, 12 dont elle est issue. Ainsi, les languettes 18 assurent en coopération avec les bords 6 ou le bras supérieur 8 l'immobilisation du cadre 2 par rapport au coffret avant 22 selon la direction avant-arrière (c'est-à-dire dans la direction de l'axe de l'écran).

Par ailleurs, chaque nervure 20 coopère avec une rainure 31 ce qui permet (ajouté au contact muret vertical 32 - paroi verticale 10) d'immobiliser le cadre 2 par rapport au coffret avant 22 selon la direction horizontale perpendiculaire à l'axe de l'écran.

Enfin, l'immobilisation selon la direction verticale du cadre 2 par rapport au coffret avant 22 est réalisée par les parois horizontales supérieure 12 et inférieures 13 au contact des murets horizontaux supérieur 34 et inférieur 35.

Le matériau dans lequel est réalisé le cadre 2 et les dimensions du cadre 2 (notamment son épaisseur) sont tels que le cadre 2 peut être aisément déformé par un utilisateur qui souhaite démonter le cadre 2, par exemple pour le remplacer par un cadre de couleur différente.

En effet, pour démonter le cadre 2 du coffret avant 22, il suffit de dégager une à une les languettes 18 de l'extrémité 33 du muret 32, 34 au contact de laquelle elles se trouvent.

Ainsi, le cadre 2 peut être séparé du coffret avant 22 par simple mouvement relatif des languettes 18 par rapport au coffret avant 22.

La dimension préférée des languettes 18 mentionnée précédemment permet d'effectuer manuellement ce dégagement.

Par ailleurs, la coopération des plots 16 et des passages 36 permet d'assurer que le montage du cadre de remplacement par l'utilisateur sera correctement réalisé.

Comme on l'a vu, il est en outre possible de monter et de démonter le cadre 2 ou le coffret arrière indépendamment l'un de l'autre. Ainsi, l'utilisateur qui change le cadre n'a pas à tenir compte du coffret arrière et ne risque donc pas de toucher le chassis (ce qui pourrait être dangereux du fait des hautes tensions présentes sur les circuits du chassis) ; de même, l'opérateur professionnel qui veut avoir accès au chassis n'a pas à tenir compte du cadre 2 et l'accès au chassis reste donc simple malgré la présence du cadre 2.

## Revendications

1. Cadre pour dispositif d'affichage d'image du type téléviseur ou moniteur comportant un coffret avant (22), le cadre comportant des moyens (18, 33) de fixation amovible sur le coffret avant (22), et comportant des moyens (18) aptes à être manoeuvrés manuellement pour séparer le cadre (2) du coffret avant (22), **caractérisé en ce que** le cadre (2) comporte deux parois latérales verticales (10) aptes à venir, chacune, au contact d'un muret latéral vertical (32) du coffret avant (22) parallèle à la paroi latérale verticale (10) les parois latérales verticales (10) portant au moins une languette (18) apte à venir au contact de l'extrémité libre (33) d'un muret latéral vertical (32) la languette s'étendant sur plus de 30 mm le long du muret latéral vertical,
la paroi latérale verticale (10) étant issue d'un bord (6) qui porte une nervure (20) apte à coopérer avec une rainure (31) du coffret avant (22).

2. Cadre selon la revendication 1, dans lequel le cadre (2) comporte au moins une paroi latérale horizontale (12) apte à venir au contact d'un muret latéral horizontal (34) du coffret avant (22).

3. Cadre selon l'une des revendications 1 à 2, dans lequel le cadre (2) comporte des moyens de positionnement (16) relativement au coffret avant (22).

4. Dispositif d'affichage d'image du type téléviseur ou moniteur et comportant un coffret avant (22) sur lequel sont montés un écran et un coffret arrière, un cadre (2) selon l'une quelconque des revendications 1 à 3, entourant l'écran étant fixé de façon amovible sur le coffret avant (22) indépendamment du coffret arrière.

5. Dispositif selon la revendication 4, **caractérisé en ce que** le cadre comporte au moins une zone grillagée (4) au droit d'un évidement (30) du coffret avant (22) pour réception d'un haut-parleur.

## Claims

1. A frame for an image display device of television or monitor type comprising a front casing (22), the frame comprising detachable fastening means (18, 33) on the front casing (22), and comprising means (18) capable of being manually handled in order to separate the frame (2) from the front casing (22) and, **characterized in that** the frame (2) comprises two vertical side walls (10), each capable of coming into contact with a vertical short wall (32) of the front casing (22), the vertical wall (10) carrying at least one tab (18) capable of coming into contact with the free end (33) of the vertical short wall (32), the tab (18) extending over more than 30 mm, the vertical wall (10) arising from an edge (6) which carries a rib (20) capable of cooperating with a groove (31) of the front casing (22).

2. The frame as claimed in claim 1, in which the frame (2) comprises at least one horizontal wall (12) capable of coming into contact with a horizontal short wall (34) of the front casing (22).

3. The frame as claimed in one of claims 1 to 2, in which the frame (2) comprises means (16) of positioning relative to the front casing (22).

4. A device for displaying an image of television or monitor type, comprising a front casing (22) on which a screen and a rear casing are mounted, a frame (2), according to any one of claims 1 to 3, surrounding the screen being detachably fastened to the front casing (22) independently of the rear casing.

5. The device according to claim 4, comprising at least one meshed region (4) intended to be accommodated directly over a recess (30) for accommodating a loudspeaker.

## Patentansprüche

1. Rahmen für eine Bildanzeigevorrichtung des Typs eines Fernsehers oder Bildschirms mit einem vorderen Gehäuse (22), wobei der Rahmen Mittel (18, 33) zur lösbaren Befestigung an dem vorderen Gehäuse (22) und Mittel (18) aufweist, die geeignet sind, manuell betätigt zu werden, um den Rahmen (2) von dem vorderen Gehäuse (22) zu trennen, **dadurch gekennzeichnet, dass** der Rahmen (2) zwei vertikale Seitenwände (10) aufweist, die geeignet sind, jeweils mit einer vertikalen, parallel zu der vertikalen Seitenwand (10) verlaufenden kurzen Seitenwand (32) des vorderen Gehäuses (22) in Kontakt zu treten, wobei die vertikalen Seitenwände (10) jeweils mindestens eine Leiste (18) tragen, die geeignet ist, mit dem freien Ende (33) einer vertikalen kurzen Seitenwand (32) in Kontakt zu treten, wobei die Leiste sich auf über 30 mm entlang der vertikalen kurzen Seitenwand erstreckt, wobei die vertikale Seitenwand (10) aus einem Rand (6) entspringt, der eine Rippe (20) trägt, die geeignet ist, mit einer Nut (31) des vorderen Gehäuses (22) zusammenzuwirken.

2. Rahmen nach Anspruch 1, bei dem der Rahmen (2) mindestens eine horizontale Seitenwand (12) aufweist, die geeignet ist, mit einer horizontalen kurzen Seitenwand (34) des vorderen Gehäuses (22) in Kontakt zu treten.

3. Rahmen nach einem der Ansprüche 1 bis 2, bei dem der Rahmen (2) Mittel zur Positionierung (16) relativ zu dem vorderen Gehäuse (22) aufweist.

4. Bildanzeigevorrichtung des Typs eines Fernsehers oder Bildschirms mit einem vorderen Gehäuse (22), an dem ein Bildschirm und ein hinteres Gehäuse montiert sind, wobei ein den Bildschirm umgebender Rahmen (2) nach einem der Ansprüche 1 bis 3 lösbar an dem vorderen Gehäuse (22) unabhängig von dem hinteren Gehäuse befestigt ist.

5. Vorrichtung nach Anspruch 4, **dadurch gekennzeichnet, dass** der Rahmen mindestens einen Gitterbereich (4) rechtwinkelig zu einer Aussparung (30) des vorderen Gehäuses (22) zur Aufnahme eines Lautsprechers aufweist.
